# EUROPÄISCHE PATENTSCHRIFT

(11) **EP 3 183 737 B1**
(45) Veröffentlichungstag und Bekanntmachung des Hinweises auf die Patenterteilung: **17.07.2019**
(21) Anmeldenummer: 15759386.4
(22) Anmeldetag: 06.08.2015
(51) Int. Cl.: H01B 13/012, H01B 7/00, D04H 13/00

(54) **KABELSATZ UND VERFAHREN ZUR HERSTELLUNG EINES SOLCHEN**
CABLE HARNESS AND METHOD FOR PRODUCING SUCH A CABLE HARNESS
JEU DE CÂBLES ET PROCÉDÉ DE PRODUCTION D'UN TEL JEU DE CÂBLES

(30) Priorität: 22.08.2014 DE 102014216761
(43) Veröffentlichungstag der Anmeldung: 28.06.2017
(73) Patentinhaber: LEONI Bordnetz-Systeme GmbH, 97318 Kitzingen (DE)
(72) Erfinder: MÜLLER, Toni, 92237 Sulzbach-Rosenberg (DE)
(74) Vertreter: FDST Patentanwälte
(86) Internationale Anmeldenummer: PCT/EP2015/068215
(87) Internationale Veröffentlichungsnummer: WO 2016/026711

(56) Entgegenhaltungen:
- DE-A1- 3 601 116
- DE-C1- 4 100 111
- DE-U- 1 674 703
- DE-U- 6 607 335
- FR-A2- 2 138 269
- JP-A- 2009 104 889

## Beschreibung

Die Erfindung betrifft ein Verfahren zur Herstellung eines Kabelsatzes, insbesondere für den Kraftfahrzeugbereich, wobei eine Anzahl von einzelnen Leitungen zu einem Leitungsbündel zusammengefasst wird und wobei das Leitungsbündel mit einem Bündelungselement versehen wird. Darüber hinaus betrifft die Erfindung einen Kabelsatz umfassend ein mit einem Bündelungselement versehenes Leitungsbündel aus einer Anzahl einzelner Leitungen, wie er beispielsweise in der DE 10 2004 023 334 A1 beschrieben ist.

Im Rahmen der Herstellung von vorkonfektionierten Kabelsätzen beispielweise für den Kraftfahrzeugbereich werden häufig einzelne Leitungen zu Leitungsbündeln zusammengefasst. Hierdurch lässt sich unter anderem der Einbau oder die Montage eines entsprechenden vorkonfektionierten Kabelsatzes vereinfachen, da statt vieler einzelner Leitungen lediglich wenige Leitungsbündel verlegt oder verbaut werden müssen. Auch wird durch das Bündeln, je nach Methode, eine gewisse Formstabilität erreicht, die gewünscht sein kann, um beispielsweise sicherzustellen, dass die Leitungen nach einem Einbau in ein Kraftfahrzeug bestimmte Stellen im Kraftfahrzeug nicht berühren. Außerdem lässt sich durch die Bündelung der vorhandene Bauraum insbesondere in einem Kraftfahrzeug besser ausnutzen.

Die entsprechend zusammengefasten Leitungen werden dabei typischerweise mit Hilfe von Bandierungen als Bündel zusammengehalten, wobei die Bandierungen in der Regel dadurch ausgebildet werden, dass die entsprechenden Leitungen mit einem Kunststoff- oder Textil-Klebeband umwickelt werden. Alternativ wird ein Zusammenhalt der einzelnen Leitungen des Leitungsbündels mit Hilfe sogenannter Wellrohre erzielt, die als vorgefertigte Bauteile vorliegen und in die die Leitungen eingefädelt oder beispielsweise durch einen Schlitz oder eine andere Öffnung eingeführt werden. Zudem ist es bekannt, die zusammengefassten Leitungen mit einer Ummantelung zu versehen, also zum Beispiel mit Kunststoff zu umspritzen. In einigen Fällen werden auch Bandierungen, Wellrohre und Ummantelungen in Kombination eingesetzt, beispielweise dann, wenn mehrere ausgebildete Leitungsbündel in einem weiteren Prozessschritt zu einer noch größeren Einheit, also einem noch größeren Leitungsbündel mit noch mehr Leitungen, zusammengefasst werden sollen.

Neben einer klassischen Bandierung sind auch Verfahren bekannt, bei denen zunächst ein textiles Gewebe oder ein Vlies um die Leitungen gelegt wird, auf das anschließend insbesondere auch zur Ausbildung einer vollständigen Kabelummantelung noch ein Kleber, ein Harz oder ein sonstiges Binde- oder Verfestigungsmittel aufgebracht wird. Derartige Verfahren sind beispielsweise zu entnehmen aus DE 10 2013 012 996 A1, der DE 101 49 071 A1 oder der DE 199 37 446 A1.

Weiterhin ist zur Ausbildung von Kabelmänteln auch das klassische (Spritz-) Gießen bekannt. Aus der DE 43 21 044 A1 sind gespritzte Formkörper an diskreten Stellen an das Leitungsbündel angespritzt.

Auch ist es bekannt Kabelstränge oder Leitungsbündel mit einer Papiermasse zu umgießen, wie dies in der DE 41 00 111 C1 beschrieben ist.

Ein wesentlicher Nachteil einiger dieser Methoden ist der Umstand, dass insbesondere das Bandieren oder das Einführen der Leitungen in entsprechende Wellrohre in der Regel manuell erfolgen muss, da entsprechende Arbeitsschritte nicht ohne Weiteres zu automatisieren sind. Eine entsprechende Automatisierung wäre jedoch wünschenswert, da hierdurch unter anderem die Herstellungskosten für entsprechende Kabelsätze reduziert werden können.

Ausgehend hiervon liegt der Erfindung die Aufgabe zugrunde, ein vorteilhaftes Verfahren zur Herstellung eines Kabelsatzes und einen vorteilhaft ausgebildeten Kabelsatz anzugeben.

Diese Aufgabe wird erfindungsgemäß gelöst durch ein Verfahren mit den Merkmalen des Anspruchs 1 sowie durch einen Kabelsatz mit den Merkmalen des Anspruchs 8. Bevorzugte Weiterbildungen sind in den rückbezogenen Ansprüchen enthalten. Die im Hinblick auf den Kabelsatz angeführten Vorteile und bevorzugten Ausgestaltungen sind sinngemäß auch auf das Verfahren übertragbar und umgekehrt.

Ein entsprechendes Verfahren dient hierbei zur Herstellung eines Kabelsatzes und insbesondere eines vorkonfektionierten Kabelsatzes beispielweise für den Kraftfahrzeugbereich, den Flugzeugbau oder den Maschinenbau. Hierbei wird im Zuge der Herstellung eine Anzahl von einzelnen Leitungen zu einem Leitungsbündel zusammengefasst und nachfolgend wird das Leitungsbündel mit einem Bündelungselement versehen, welches durch eine textilartige Faserverflechtung ausgebildet ist, die die Leitungen im Leitungsbündel als Leitungsbündel zusammenhält.

Bei den entsprechenden Leitungen handelt es sich dabei um einzelne mit einer Isolierung versehene Leitungsadern oder aber um Leitungskabel aus mehreren Leitungsadern, wobei die Leitungsadern auch in diesem Fall in der Regel jeweils mit einer Isolierung versehen sind und wobei die Leitungsadern der Leitungskabel zudem mit einer zusätzlichen isolierenden Ummantelung versehen sind. Als Leitungsadern wiederum sind je nach Anwendungszweck Massivdrahtleiter oder Litzenleiter vorgesehen, wobei in einigen Fällen in einem Leitungsbündel sowohl Massivdrahtleiter als auch Litzenleiter enthalten sind.

Zur Ausbildung des Bündelungselements und somit der textilartigen Faserverflechtung wird im Rahmen der Herstellung des Kabelsatzes eine Suspension auf das Leitungsbündel aufgebracht, welche eine Bindemittel und lose Fasern umfasst. Die Suspension wirkt dabei wie eine Art "Textilgewebe-Lösung", die sich auf beliebig geformte Oberflächen auftragen lässt, und die durch Entzug des "Lösungsmittels" der "Textilgewebe-Lösung" in eine Art Textilgewebe, also zu einer textilartigen Gewebeverflechtung verfestigt oder umgewandelt wird, so dass also ein formstabiles Gebilde entsteht. Die Verfestigung erfolgt dabei typischer Weise entweder durch eine aktive Nachbehandlung, wie beispielsweise durch eine Erwärmung oder eine Bestrahlung mit UV-Licht, oder aber ohne eine aktive Nachbehandlung, beispielsweise durch passive Trocknung während einer Trocknungsphase. In Folge dessen liegt dann die textilartige Faserverflechtung an der Oberfläche, auf die die Suspension aufgetragen wurde, an, sodass die Form der textilartigen Faserverflechtung und somit des Bündelungselements automatisch an die Geometrie des Leitungsbündels angepasst ist. Bei der Suspension handelt es sich daher allgemein um eine Flüssigkeit, insbesondere von wässriger Konsistenz, in der die Fasern enthalten sind.

Im Unterschied zu herkömmlichen Verfahren ist daher kein Aufwändiges Auflegen oder Umwickeln des Leitungsbündels erforderlich, wie dies beispielsweise bei der Verwendung von Bandierungen oder auch von textilen Geweben oder Vliesen der Fall ist. Vorliegend sind in der Suspension die Fasern lose enthalten. Hierunter wird verstanden, dass die einzelnen Fasern nicht zu einem vorgefertigten (Flächen-) Gebilde miteinander verbunden sind, also insbesondere kein Gewebe, Gewirke oder Vlies ausbilden. Die einzelnen Fasern bilden daher keine Form aus. Erst nach dem Aufbringen der Suspension und dem nachfolgenden Verfestigen wird ein textiles Gebilde als Faserverflechtung und damit das Bündelungselement ausgebildet.

Ein weiterer Vorteil des hier beschriebenen Verfahrens ist darin zu sehen, dass die Suspension bei Raumtemperatur aufgebracht wird, also keine Erwärmung der Suspension vorgenommen wird.

Weiterhin wird die Suspension auch in einfacher Weise auf das Leitungsbündel aufgetragen, ohne dass hierfür eine Form erforderlich ist. Das Aufragen erfolgt dabei mit einem z.B. für das Auftragen von Farben bekanntem Verfahren wie Sprühen, Spritzen etc.

Die Faserverlechtung wird dabei insbesondere lediglich an diskreten Stellen des Leitungsbündels aufgebracht und dient gerade nicht zur vollständigen Ummantelung des Leitungsbündels. Insbesondere werden über die Länge des Leitungsbündels verteilt mehrere zueinander beabstandete Faserverflechtungen aufgebracht.

Auf diese Weise lässt sich somit jede beliebige Form mit einer entsprechenden textilartigen Faserverflechtung umhüllen, ummanteln oder auch quasi lokal beschichten. Daher ist der Herstellungsprozess zur Herstellung der textilartigen Faserverflechtung relativ einfach und dementsprechend lassen sich zum Beispiel die einzelnen Arbeits- oder Herstellungsprozessschritte auch ohne weiteres automatisieren. In Folge der einfachen Anpassbarkeit der Form der textilartigen Faserverflechtung und insbesondere in Folge der einfachen Anpassbarkeit an verschiedenste Geometrie und Oberflächenformen lassen sich außerdem durch die textilartigen Faserverflechtungen nicht nur klassische Bandierungen durch die textilartigen Faserverflechtungen ersetzen, sondern darüber hinaus auch die zur Bündelung von Leitungen eingesetzten Wellrohre und Ummantelungen. Außerdem lassen sich mit der textilartigen Faserverflechtung auch Volumenbereiche, also beispielsweise Hohlräume, auffüllen, wobei die textilartige Faserverflechtung je nach Zusammensetzung prinzipiell auch geeignet ist, um eine Dichtwirkung zu erzielen und hierdurch zwei Raumbereiche beispielsweise flüssigkeitsdicht gegeneinander abzutrennen.

Weiter wird das Bündelungselement je nach Anforderung bevorzugt durch mehrmaliges Aufbringen der Suspension, gegebenenfalls im Wechsel mit Trocknungsphasen oder Nachbehandlungen, oder aber durch eine Abfolge von Aufbringen und Nachbehandeln verschiedener Suspensionen hergestellt. Durch ein mehrmaliges Aufbringen derselben Suspension lassen sich beispielsweise unterschiedlich starke oder dicke Bündelungselemente ausbilden, so dass zum Beispiel durch ein einmaliges Aufbringen der Suspension eine Faserverflechtung ausgebildet wird, die hinsichtlich ihrer geometrischen Abmessungen einer Bandierung nach dem Stand der Technik ähnelt, wohingegen durch ein mehrmaliges Aufbringen und gegebenenfalls Nachbehandeln ein Bündelungselement hergestellt wird, welches einer Ummantelung nach dem Stand der Technik ähnelt und entsprechende geometrische Abmessungen aufweist.

Durch verschieden häufiges Aufbringen lassen sich zudem die physikalischen Eigenschaften der Faserverflechtung variabel vorgeben, wobei mit einer zunehmenden Anzahl von Aufbringungen die Flexibilität und die Elastizität des Bündelungselements typischerweise abnimmt und die Steifigkeit zunimmt. Durch die Verwendung verschiedener Suspensionen, die sich bevorzugt nicht hinsichtlich der Inhaltsstoffe sondern hinsichtlich der Mischungsverhältnisse unterscheiden, lässt sich dieser Effekt zusätzlich verstärken. In jedem Fall aber weist ein entsprechendes Bündelungselement eine Dicke oder Stärke oder Wandstärke im Bereich zwischen 0,1 mm und 20 mm und insbesondere zwischen 0,2 und 5 mm auf.

Von Vorteil ist es zudem, wenn die Suspension ein Lösungsmittel enthält, in welchem das Bindemittel löslich ist und wenn das Lösungsmittel im Zuge einer Nachbehandlung der Suspension entzogen wird, so dass sich hierdurch die textilartige Faserverflechtung ausbildet. In vorteilhafter Weiterbildung wird dann ein Lösungsmittel eingesetzt, welches bei typischen Raumbedingungen verdunstet oder sich verflüchtigt, so dass keine aktive Nachbehandlung für die Umwandlung der Suspension in die textilartige Faserverflechtung notwendig ist und eine einfache passive Trocknung genügt, wobei weiter bevorzugt die Raumbedingungen zu Gunsten einer schnelleren Trocknung angepasst werden, indem beispielsweise die Temperatur erhöht und/oder eine Luftströmung vorgegeben wird.

Unabhängig von den Details des Herstellungsprozesses erfolgt die Bündelung der Leitungen und die Herstellung des Bündelungselements bevorzugt teil- oder vollautomatisiert und darüber hinaus bevorzugt in einem abgegrenzten oder abgeschlossenen Arbeitsbereich, unter anderem um hierdurch eine eventuelle Belastung für Bedienpersonal zu vermeiden.

Insbesondere auch zu Gunsten der Automatisierung wird die Suspension außerdem auf das Leitungsbündel aufgespritzt, wobei die Suspension hierfür eine ausreichend hohe Viskosität aufweist, so dass diese am Leitungsbündel haftet, also quasi nicht verläuft und nicht herunter tropft.

Für ein entsprechendes Aufspritzen wird weiter aus der Suspension und einem Treibgas oder Treibmittel ein Aerosol hergestellt, so dass die Aufbringung der Suspension ähnlich erfolgt wie die Auftragung eines Lackes auf eine Fahrzeugkarosserie.

Vorteilhafte Zusammensetzungen des Aerosols und/oder der Suspension sind in der Druckschrift EP 1 910 600 B1 beschrieben, auf welche hiermit ausdrücklich Bezug genommen wird. Als Fasern kommen somit bevorzugt beispielsweise Baumwollfasern, Leinenfasern oder Glasfasern zum Einsatz, wobei mehr als 60% und vorzugsweise etwa 80 % der Fasern eine Länge kleiner 30 mm und insbesondere zwischen 0,02 mm und 10 mm aufweisen. Außerdem enthält die Suspension in den meisten Anwendungsfällen zwei Typen von Fasern, wobei ein Typ in der Regel durch Polymerfasern gegeben ist. Als Bindemittel oder Binder kommt weiter bevorzugt ein thermoplastisches Elastomer-Blockcopolymer zum Einsatz, also zum Beispiel Polyvinylacetat (PVAC) oder Polyvinylbutyral (PVB). Als Verdünner oder Lösungsmittel wiederum wird beispielsweise Acetonmetanol oder Ethylacetat eingesetzt. Weitere Varianten, Zusammensetzungen und Mischungsverhältnisse sind in der EP 1 910 600 B1 näher beschrieben und dementsprechend wird in diesem Zusammenhang auf die entsprechende Offenbarung dieser Druckschrift verwiesen.

Wie zuvor bereits erwähnt, erlaubt es das hier vorgestellte Verfahren, das Bündelungselement durch eine entsprechende Anpassung der Ausgestaltung flexibel an verschiedene Anforderungen anzupassen. Die Anpassung erfolgt dabei insbesondere durch eine entsprechende Modifizierung der Aufbringung und gegebenenfalls der Nachbehandlung. Hierbei werden je nach Anwendungszweck bei einem einzigen Kabelsatz auch verschiedene, also verschieden ausgestaltete, Bündelungselemente realisiert.

So wird die Suspension zum Beispiel in einigen Fällen derart aufgetragen, dass das Bündelungselement letzten Endes bandartig, beispielsweise mit einer Bandstärke zwischen 0,2 mm und 1 mm, ausgestaltet ist und das Leitungsbündel ringartig umschließt. In diesem Fall wirkt das Bündelungselement dann lokal nach Art eines Kabelbinders oder einer Kabelschelle, welche bevorzugt lediglich am Leitungsbündel anliegt, die einzelnen Leitungen jedoch nicht gegeneinander verpresst. In anderen Fällen erfolgt eine Aufbringung derart, dass das Bündelungselement letzten Endes bandartig, zum Beispiel mit einer Bandstärke zwischen 0,2 mm und 0,5 mm, ausgestaltet ist und das Leitungsbündel über einen Abschnitt hinweg helixartig umschlingt. Diese Variante ist insbesondere von Vorteil, wenn wenige feine oder dünne Leitungen über einen größeren Abschnitt hinweg in einem Bündel zusammengehalten werden sollen.

Sollen hingegen mehrere stärke Leitungen oder Leitungskabel zusammengefasst und zusammengehalten werden, so wird das Bündelungselement bevorzugt nach Art einer Ummantelung, beispielsweise mit einer Mantelstärke zwischen 2 mm und 10 mm, ausgeführt, wobei hierfür weiter bevorzugt ein mehrmaliges Aufbringen der Suspension, gegebenenfalls im Wechsel mit Trocknungsphasen oder Nachbehandlungen, erfolgt.

Zudem erfolgt in einigen Situationen eine Auftragung der Suspension derart, dass das Bündelungselement schlussendlich nach Art einer Gabelung oder Abzweigung ausgebildet ist, durch welche zumindest eine Leitung des Leitungsbündels von den übrigen Leitungen weggeführt ist oder aber, umgekehrt betrachtet, bei der zumindest eine Leitung zu einem bereits ausgebildeten Leitungsbündel hinzugefügt wird.

Darüber hinaus erlaubt es das Verfahren auch, die zuvor beschriebenen Ausgestaltungsvarianten miteinander zu kombinieren oder miteinander zu verschmelzen und dementsprechend relativ komplexe Strukturen auszubilden.

In jedem Fall aber wird im Zuge des Verfahrens eine textilartige Faserverflechtung mit einer ungeordneten oder amorphen Faserverteilung hergestellt. Obwohl die textilartige Faserverflechtung somit hinsichtlich der Faserverteilung, Faserverflechtung und Faserstruktur mehr einem Vlies ähnelt, ist die Reißfestigkeit der textilartigen Faserverflechtung eher vergleichbar mit der eines gewebten Textils. Dies resultiert vorrangig daraus, dass der Faserverbund von einem Binder oder Bindemittel durchsetzt ist, der bzw. das den Zusammenhalt zwischen den einzelnen Fasern verstärkt.

Der Volumenanteil der Fasern in der textilartigen Faserverflechtung beträgt dabei, in Abhängigkeit der Zusammensetzung der verwendeten Suspension, bevorzugt mehr als 60 %, insbesondere mehr als 75 % und in einigen Fällen mehr als 80%. In diesen Fällen sind die Fasern dann weniger in den Binder eingebettet, als vielmehr mit dem Binder teilweise ummantelt oder benetzt, so dass die Struktur der textilartigen Faserverflechtung die einzelnen Faser weiterhin erkennen lässt und die optische Erscheinung in einigen Fällen an Zuckerwatte erinnert.

Der Zusammenhalt zwischen den einzelnen Fasern ist zudem typischerweise wesentlich größer als die Haftwirkung zwischen der textilartigen Faserverflechtung und der Oberfläche, auf welche die Suspension aufgetragen wurde. Daher lässt sich die textilartige Faserverflechtung typischerweise von der Oberfläche ablösen, ohne hierdurch die textilartige Faserverflechtung zu beschädigen. Diese kann daher zum Beispiel nachträglich von der Oberfläche abgelöst und dann entlang des Leitungsbündels verschoben werden.

Außerdem ist die textilartige Faserverflechtung in den meisten Fällen nicht nur flexibel sondern auch elastisch, wobei die Elastizität in einigen Fällen vergleichbar mit einem sogenannten Gummibund ist, so dass sich beispielsweise bei Bedarf nachträglich weitere Leitungen in das Leitungsbündel einfügen und durch die textilartige Faserverflechtung durchführen lassen. Die textilartige Faserverflechtung lässt sich dabei bevorzugt im Rahmen einer elastische Verformung um mehr als 5 % und insbesondere um mehr als 10 % strecken, jeweils bezogen auf ihre Ausdehnung in Richtung der Streckung. Die entsprechende Elastizität wird hierbei mit Hilfe elastischer Fasern und/oder mittels eines elastischen Binders realisiert.

Da bei der textilartigen Faserverflechtung bei Bedarf mittels des den Faserverbund durchsetzenden Binders zudem eine Haftwirkung erzielt wird, die ein Anhaften an der Oberfläche des Leitungsbündels bewirkt, ist die textilartig Faserverflechtung im Gegensatz zu Klebebändern in der Regel unbeschichtet, weist also insbesondere keine einseitig aufgetragene Klebebeschichtung auf. Gerade diese Klebebeschichtungen sind häufig nicht so langlebig, wie gewünscht, so dass die Wirkung nach einiger Zeit nachlässt, wodurch der Zusammenhalt im Leitungsbündel verloren geht. Diese Problematik tritt bei der textilartigen Faserverflechtung typischerweise nicht auf.

Vorzugsweise ist neben der textilen Faserverflechtung noch ein weiteres Bündelungselement angeordnet, welches andersartig und insbesondere als Bandierung ausgebildet ist. Speziell wird das Bündelungselement dabei in Längsrichtung des Leitungsbündels beabstandet von der Faserverlechtung angebracht. Bei Bedarf kann das weitere Bündelungselement auch zusätzlich um die Faserverflechtung herum gelegt werden.

In bevorzugter Ausgestaltung wird das weitere Bündelungselement dabei ein belasteten, insbesondere biegebelasteten Bereichen des Leitungsbündels angebracht. Hierunter werden Bereiche verstanden, bei denen das Leitungsbündel eine Biegung oder auch eine Abzweigung aufweist, oder in denen im eingesetzten Zustand eine Biegebelastung zu erwarten ist, z.B. durch eine bestimmungsgemäße Bewegung des Leitungsbündels am vorgesehenen Einsatzort.

Ausführungsbeispiele der Erfindung werden nachfolgend anhand einer schematischen Zeichnung näher erläutert. Darin zeigen:
- Fig. 1: in einer Seitenansicht einen Kabelsatz sowie
- Fig. 2: in einem Ablaufdiagramm ein Verfahren zur Herstellung des Kabelsatzes.

Einander entsprechende Teile sind in allen Figuren jeweils mit den gleichen Bezugszeichen versehen.

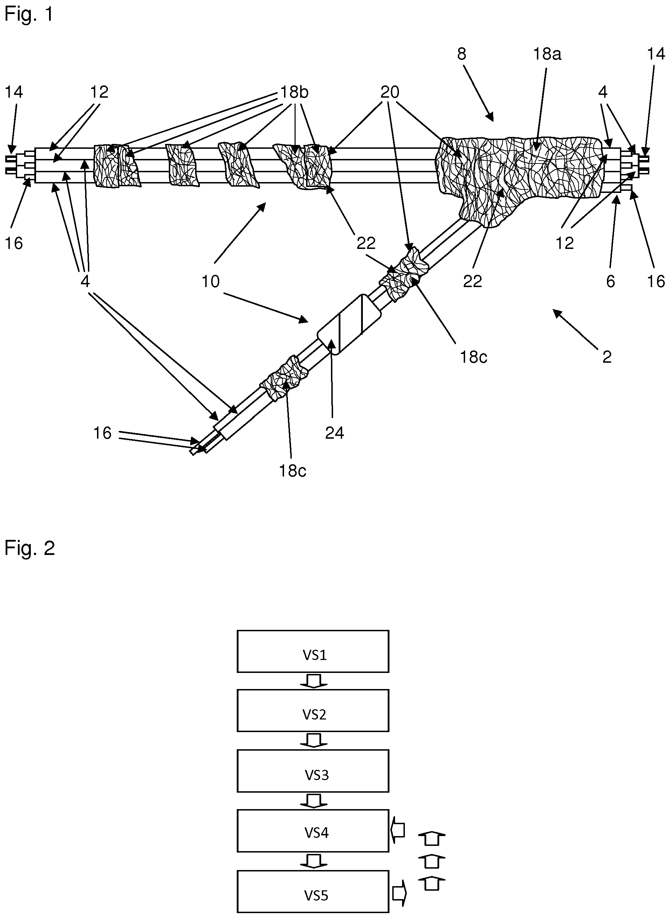

Ein nachfolgend exemplarisch beschriebener und in Fig. 1 skizzierter Kabelsatz 2 ist Teil eines sogenannten Kabelbaums eines Kraftfahrzeuges und dementsprechend in einem Kraftfahrzeug verbaut. Der Kabelsatz 2 umfasst dabei mehrere einzelne Leitungen 4, welche in einem Leitungsbündel 6 zusammengefasst sind, wobei sich das Leitungsbündel 6 an einer Abzweigung 8 in zwei Teilbündel 10 aufspaltet.

Jedes Teilbündel 10 umfasst wiederum mehrere Leitungen 4, die im Ausführungsbeispiel als einzelne Leitungsadern mit einer isolierenden Ummantelung 12 ausgebildet sind. Dabei sind einige Leitungsadern als Litzenleiter 14 und andere als Massivdrahtleiter 16 ausgestaltet.

Die einzelnen Leitungen 4 des Leitungsbündels 6 sowie die einzelnen Leitungen 4 der beiden Teilbündel 10 werden jeweils mit Hilfe von Bündelungselementen 18, die als textilartige Faserverflechtungen ausgebildet sind, im Bündel zusammengehalten. Dabei ist eines der Bündelungselemente 18a nach Art einer Ummantelung ausgebildet und weist dementsprechend eine Stärke von 3 mm auf. Zudem ist mit Hilfe dieses Bündelungselements 18a die Abzweigung 8 realisiert, wobei die beiden Teilbündel 10 im Bereich der Abzweigung 8 mittels des Bündelungselements 18a auf Abstand gehalten werden.

Auch die beiden Teilbündel 10 sind jeweils mit Bündelungselementen 18 versehen, wobei das Teilbündel 10 mit der größeren Anzahl Leitungen 4 ein Bündelungselement 18b aufweist, welches bandartig ausgestaltet und helixartig um das Teilbündel 10 herumgeführt ist. Die Stärke des bandartigen Bündelungselements 18b ist dabei mit der eines Textil-Klebebandes vergleichbar und beträgt etwa 0,5 mm. Das Teilbündel 10 mit der kleineren Anzahl Leitungen 4 ist dagegen mit zwei bandartig ausgestalteten Bündelungselementen 18c versehen, die das entsprechende Teilbündel 10 jeweils nach Art einer Kabelschelle ringförmig umgreifen. Jene Bündelungselemente 18c weisen dabei eine Stärke von etwa 1 mm auf.

In der Fig. 1 ist ergänzend schematisiert noch ein weiteres, vorzugsweise als Bandierung 24 ausgebildetes Bündelungselement dargestellt. Das weitere Bündelungselement ist allgemein zur Aufnahme von größeren Kräften im Vergleich zu der textilen Faserverflechtung ausgebildet und ist insbesondere in belasteten Bereichen des Leitungsbündels 6 angeordnet. So ist beispielsweise der Bereich, in dem die Bandierung 24 angeordnet ist, ein Bereich, in dem beim bestimmungsgemäßen Einsatz eine Biegebeanspruchung des Leitungsbündels 6 auftritt.

Die Bündelung der einzelnen Leitungen 4 sowie die Herstellung der entsprechenden Bündelungselemente 18 erfolgt vollautomatisiert im Rahmen der Herstellung des Kabelsatzes 2, wobei in einem ersten Verfahrensschritt VS1 eine Suspension aus einem Lösungsmittel, einem darin löslichen Bindemittel 20 und Fasern 22 hergestellt wird. In einem gemäß Fig. 2 nachfolgenden Verfahrensschritt VS2 wird dann aus der Suspension und einem Treibmittel ein Aerosol gebildet, wobei je nach Zusammensetzung auch ein und dieselbe Komponente als Lösungsmittel und als Treibmittel dienen kann, so dass in diesem Fall die ersten beiden Verfahrensschritte VS1, VS2 im Prinzip zusammenfallen.

Dem nachfolgend beschriebenen Ausführungsbeispiel liegt die unter Beispiel 2 auf Seite 9 der Druckschrift EP 1 910 600 B1 beschriebene Rezeptur zugrunde, auf die hiermit verwiesen wird, wobei die genaue Rezeptur oder Zusammensetzung für die nachfolgende Beschreibung nicht weiter von Belang ist.

Steht nun die Suspension bzw. das Aerosol zur Verfügung, so werden in einem weiteren Verfahrensschritt VS3 die für eine Bündelung vorgesehenen Leitungen 4 mittels eines Roboterarms in eine Halterung eingelegt. In einem nachfolgenden Verfahrensschritt VS4 wird dann das Aerosol auf die zusammengefassten Leitungen 4 aufgespritzt, wobei die Aufspritzung derart erfolgt, dass die anhaftende Suspension bereits grundlegend die Form wiederspiegelt, die das entsprechende Bündelungselement 18 letzten Endes aufweisen soll. Das heißt also, dass für ein bandartiges Bündelungselement 18b, welches helixartig um die zusammengefassten Leitungen 4 geführt sein soll, die Suspension auch helixartig auf die entsprechenden Leitungen 4 aufgetragen wird.

Nach der Auftragung erfolgt in einem Verfahrensschritt VS5 eine Trocknung, bei der sich das Lösungsmittel verflüchtigt, wodurch sich aus der Suspension die textilartige Faserverflechtung ausbildet. Je nach gewünschter Stärke oder Dicke der textilartigen Faserverflechtung werden die Verfahrensschritte VS4 und VS5 mehrmals abwechselnd ausgeführt, wobei mit jeder Auftragung und Trocknung die Stärke oder Dicke der Faserverflechtung weiter zunimmt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung gemäß der angefügten Ansprüche zu verlassen.

### Bezugszeichenliste

- 2: Kabelsatz
- 4: Leitung
- 6: Leitungsbündel
- 8: Abzweigung
- 10: Teilbündel
- 12: Isolierung
- 14: Litzenleiter
- 16: Massivdrahtleiter
- 18: Bündelungselement
- 20: Bindermittel
- 22: Faser
- 24: Bandierung

- 18a: zweigartiges Bündelungselement
- 18b: helixartiges Bündelungselement
- 18c: ringartiges Bündelungselement

- VS1: Verfahrensschritt 1
- VS2: Verfahrensschritt 2
- VS3: Verfahrensschritt 3
- VS4: Verfahrensschritt 4
- VS5: Verfahrensschritt 5

## Patentansprüche

1. Verfahren zur Herstellung eines Kabelsatzes (2), wobei eine Anzahl von einzelnen Leitungen (4) zu einem Leitungsbündel (6,10) zusammengefasst wird (VS3) und wobei das Leitungsbündel (6,10) mit einem Bündelungselement (18) versehen wird (VS4,VS5), wobei das Bündelungselement (18) als textilartige Faserverflechtung (18) mit einer ungeordneten Faserverteilung ausgebildet wird, wobei hierzu eine Suspension auf das Leitungsbündel (6,10) aufgebracht wird, in der lose Fasern (22) und Bindemittel (20) enthalten sind und die nach dem Auftragen sich zur Ausbildung der textilartigen Faserverflechtung (18) verfestigt,
**dadurch gekennzeichnet,**
**dass** aus der Suspension und einem Treibgas ein Aerosol hergestellt wird (VS2) und wobei das Aerosol auf das Leitungsbündel (6,10) gesprüht und somit die Suspension auf das Leitungsbündel (6,10) aufgespritzt wird (VS4).

2. Verfahren nach Anspruch 1,
**dadurch gekennzeichnet,**
**dass** das Bündelungselement (18) durch mehrmaliges Aufbringen (VS4) der Suspension oder durch Aufbringen (VS4) verschiedener Suspensionen hergestellt wird.

3. Verfahren nach Anspruch 1 oder 2,
**dadurch gekennzeichnet,**
**dass** die Suspension ein Lösungsmittel enthält, in welchem das Bindemittel löslich ist und dass das Lösungsmittel der Suspension entzogen wird (VS5).

4. Verfahren nach einem der Ansprüche 1 bis 3,
**dadurch gekennzeichnet,**
**dass** die Aufbringung (VS4) der Suspension automatisiert erfolgt.

5. Verfahren nach einem der Ansprüche 1 bis 4,
**dadurch gekennzeichnet,**
**dass** die Suspension derart aufgetragen wird (VS4), dass das Bündelungselement (18) bandartig ausgestaltet ist und das Leitungsbündel (10) ringartig (18c) oder helixartig (18b) umschließt.

6. Verfahren nach einem der Ansprüche 1 bis 4,
**dadurch gekennzeichnet,**
**dass** die Suspension derart aufgetragen wird (VS4), dass das Bündelungselement (18a) das Leitungsbündel (6) nach Art Ummantelung (18a) über einen Abschnitt hinweg umschließt.

7. Verfahren nach einem der vorherigen Ansprüche,
**dadurch gekennzeichnet,**
**dass** das Bündelungselement (18a) mit einer Verzweigung (8) ausgebildet wird, durch welche zumindest eine Leitung (4,10) des Leitungsbündels (6) von den übrigen Leitungen (4,10) weggeführt ist.

8. Kabelsatz (2), hergestellt mittels eines Verfahrens nach einem der vorherigen Ansprüche, umfassend ein mit einem Bündelungselement (18) versehenes Leitungsbündel (6,10) aus einer Anzahl einzelner Leitungen (4), wobei das Bündelungselement (18) als textilartige Faserverflechtung (18) mit einer ungeordneten Faserverteilung ausgebildet ist, die am Leitungsbündel (6,10) anliegt und aus einer Vielzahl ungeordneter, einzelner Fasern (22) besteht, deren Zusammenhalt durch ein Bindemittel (20) verstärkt ist,
**dadurch gekennzeichnet,**
**dass** die textilartige Faserverflechtung (18) elastisch ist und durch elastische Verformung um mehr als 5 % gestreckt werden kann bezogen auf ihre Ausdehnung in Richtung der Streckung.

9. Kabelsatz (2) nach Anspruch 8,
**dadurch gekennzeichnet,**
**dass** der Volumenanteil der Fasern (22) in der textilartigen Faserverflechtung (18) größer 60 % ist.

10. Kabelsatz (2) nach Anspruch 8 oder 9,
**dadurch gekennzeichnet,**
**dass** die textilartige Faserverflechtung (18) unbeschichtet ist.

11. Kabelsatz (2) nach einem der Ansprüche 8 bis 10,
**dadurch gekennzeichnet,**
**dass** zusätzlich zu der textilartigen Faserverflechtung (18) ein weiteres Bündelungselement (24) um das Leitungsbündel (6,10) angebracht ist, welches insbesondere als eine Bandierung ausgebildet ist.

12. Kabelsatz (2) nach Anspruch 11,
**dadurch gekennzeichnet,**
**dass** das weitere Bündelungselement (24) beabstandet von der textilen Faserverflechtung (6,10) und/oder an biegebelasteten Bereichen des Leitungsbündels angebracht ist.

## Claims

1. Method for producing a cable harness (2), wherein a number of individual lines (4) are combined (VS3) to form one line bundle (6, 10), and wherein the line bundle (6, 10) is provided (VS4, VS5) with a bundling element (18), wherein the bundling element (18) is configured as a textile-type fiber interlacement (18) having a non-oriented fiber distribution, wherein to this end a suspension in which loose fibers (22) and binding agents (20) are contained and which following application solidifies so as to configure the textile-type fiber interlacement (18) is applied to the line bundle (6, 10), **characterized in that** an aerosol is produced (VS2) from the suspension and a propellant gas and wherein the aerosol is sprayed onto the line bundle (6, 10) and the suspension is thus sprayed (VS4) onto the line bundle (6, 10).

2. Method according to Claim 1, **characterized in that** the bundling element (18) is produced by multiple applications (VS4) of the suspension, or by applying (VS4) various suspensions.

3. Method according to Claim 1 or 2, **characterized in that** the suspension contains a solvent in which the binding agent is soluble, and **in that** the solvent is extracted (VS5) from the suspension.

4. Method according to one of Claims 1 to 3, **characterized in that** the application (VS4) of the suspension is performed in an automated manner.

5. Method according to one of Claims 1 to 4, **characterized in that** the suspension is applied (VS4) in such a manner that the bundling element (18) is designed in a tape-like manner and encloses the line bundle (10) in an annular (18c) or helical (18b) manner.

6. Method according to one of Claims 1 to 4, **characterized in that** the suspension is applied (VS4) in such a manner that the bundling element (18a) across one portion encloses the line bundle (6) in the manner of a sheathing (18a).

7. Method according to one of the preceding claims, **characterized in that** the bundling element (18a) is configured with a junction (8) by way of which at least one line (4, 10) of the line bundle (6) is routed away from the rest of the lines (4, 10).

8. Cable harness (2), produced by means of a method according to one of the preceding claims, comprising a line bundle (6, 10) made from a number of individual lines (4) and provided with a bundling element (18) wherein the bundling element (18) is configured as a textile-type fiber interlacement (18) having a non-oriented fiber distribution, which bears on the line bundle (6, 10) and is composed of a multiplicity of non-oriented individual fibers (22) of which the cohesion is reinforced by a binding agent (20), **characterized in that** the textile-type fiber interlacement (18) is elastic and can be elongated, by way of elastic deformation, by more than 5% as seen in relation to its extent in the direction of elongation.

9. Cable harness (2) according to Claim 8, **characterized in that** the volumetric proportion of the fibers (22) in the textile-type fiber interlacement (18) is more than 60%.

10. Cable harness (2) according to Claim 8 or 9, **characterized in that** the textile-type fiber interlacement (18) is uncoated.

11. Cable harness (2) according to one of Claims 8 to 10, **characterized in that**, in addition to the textile-type fiber interlacement (18), a further bundling element (24) which in particular is configured as taping is attached around the line bundle (6, 10).

12. Cable harness (2) according to Claim 11, **characterized in that** the further bundling element (24) is attached so as to be spaced apart from the textile fiber interlacement (6, 10) and/or to flexurally stressed regions of the line bundle.

## Revendications

1. Procédé de fabrication d'un jeu de câbles (2), un certain nombre de lignes (4) individuelles étant regroupées en un faisceau de lignes (6, 10) (VS3) et le faisceau de lignes (6, 10) étant pourvu d'un élément de mise en faisceau (18) (VS4, VS5), l'élément de mise en faisceau (18) étant réalisé sous la forme d'un entrelacement de fibres (18) de type textile avec une distribution de fibres aléatoire, une suspension étant appliquée à cet effet sur le faisceau de lignes (6, 10), laquelle contient des fibres détachées (22) et un agent liant (20) et laquelle se solidifie après l'application pour former l'entrelacement de fibres (18) de type textile,
**caractérisé en ce que**
un aérosol est produit à partir de la suspension et d'un gaz propulseur (VS2) et l'aérosol est pulvérisé sur le faisceau de lignes (6, 10) et la suspension est ainsi projetée sur le faisceau de lignes (6, 10) (VS4).

2. Procédé selon la revendication 1, **caractérisé en ce que** l'élément de mise en faisceau (18) est produit par application multiple (VS4) de la suspension ou par application (VS4) de différentes suspensions.

3. Procédé selon la revendication 1 ou 2, **caractérisé en ce que** la suspension contient un solvant dans lequel l'agent liant est soluble et **en ce que** l'agent liant est extrait de la suspension (VS5).

4. Procédé selon l'une des revendications 1 à 3, **caractérisé en ce que** l'application (VS4) de la suspension s'effectue de manière automatisée.

5. Procédé selon l'une des revendications 1 à 4, **caractérisé en ce que** la suspension est appliquée (VS4) de telle sorte que l'élément de mise en faisceau (18) est configuré en forme de bande et entoure le faisceau de lignes (10) à la manière d'une bague (18c) ou à la manière d'une structure hélicoïdale (18b).

6. Procédé selon l'une des revendications 1 à 4, **caractérisé en ce que** la suspension est appliquée (VS4) de telle sorte que l'élément de mise en faisceau (18a) entoure le faisceau de lignes (6) à la manière d'une enveloppe (18a) sur une portion donnée.

7. Procédé selon l'une des revendications précédentes, **caractérisé en ce que** l'élément de mise en faisceau (18a) est configuré avec une bifurcation (8) à travers laquelle au moins une ligne (4, 10) du faisceau de lignes (6) s'écarte des autres lignes (4, 10).

8. Jeu de câbles (2), fabriqué au moyen d'un procédé selon l'une des revendications précédentes, comprenant un faisceau de lignes (6, 10) constitué d'un certain nombre de lignes (4) individuelles pourvu d'un élément de mise en faisceau (18), l'élément de mise en faisceau (18) étant réalisé sous la forme d'un entrelacement de fibres (18) de type textile avec une distribution de fibres aléatoire, lequel repose contre le faisceau de lignes (6, 10) et se compose d'un certain nombre de fibres (22) individuelles aléatoires dont la cohésion est renforcée par un agent liant (20), **caractérisé en ce que**
l'entrelacement de fibres (18) de type textile est élastique et peut être étiré de plus de 5 % par déformation élastique par rapport à son étendue dans le sens de l'étirage.

9. Jeu de câbles (2) selon la revendication 8, **caractérisé en ce que** la part volumique de fibres (22) dans l'entrelacement de fibres (18) de type textile est supérieure à 60 %.

10. Jeu de câbles (2) selon la revendication 8 ou 9, **caractérisé en ce que** l'entrelacement de fibres (18) de type textile est non revêtu.

11. Jeu de câbles (2) selon l'une des revendications 8 à 10, **caractérisé en ce qu'**un élément de mise en faisceau (24) supplémentaire est posé autour du faisceau de lignes (6, 10) en plus de l'entrelacement de fibres (18) de type textile, lequel est notamment réalisé sous la forme d'un bandage.

12. Jeu de câbles (2) selon la revendication 11, **caractérisé en ce que** l'élément de mise en faisceau (24) supplémentaire est appliqué espacé de l'entrelacement de fibres (6, 10) de type textile et/ou au niveau de zones chargées en flexion du faisceau de lignes.
